Europäisches Patentamt

European Patent Office

Office européen des brevets

(19)

(11) Publication number: **0 119 172**
**B1**

(12) **EUROPEAN PATENT SPECIFICATION**

(45) Date of publication of patent specification: **09.09.87**    (51) Int. Cl.⁴: **H 02 K 15/09**

(21) Application number: **84830055.4**

(22) Date of filing: **02.03.84**

(54) **Device for forming the rotor winding coils of a dynamoelectric machine and for anchoring the ends of the coils to a commutator associated with the rotor.**

(30) Priority: **08.03.83 IT 6726483**

(43) Date of publication of application:
**19.09.84 Bulletin 84/38**

(45) Publication of the grant of the patent:
**09.09.87 Bulletin 87/37**

(84) Designated Contracting States:
**CH DE FR GB IT LI**

(56) References cited:
**FR-A-1 556 222**
**US-A-3 557 433**

(73) Proprietor: **OFFICINE MECCANICHE PAVESI &
C. S.p.A.
Via Biella 60/62
I-10060 Cascine Vica (Torino) (IT)**

(72) Inventor: **Barrera, Giorgio
Via Novalesa 12
I-10096 Leumann (Torino) (IT)**

(74) Representative: **Notaro, Giancarlo et al
c/o Jacobacci-Casetta & Perani S.p.A.
Via Alfieri, 17
I-10121 Torino (IT)**

Courier Press, Leamington Spa, England.

## Description

The present invention relates to a device for forming the rotor winding coils of a dynamoelectric machine and for anchoring the ends of the coils to a commutator associated with the rotor, of the type indicated in the pre-characterising portion of the attached Claim 1.

A device of this type is known from GB—A—1 149 433.

According to known practice, the said step of inserting each coil end in the corresponding commutator slot and the preceding step of bending the portion of copper wire adjacent the end of the coil towards the shaft of the rotor, are effected in the intervals between the winding of successive coils, when the winding device for the copper wire is stopped.

This involves a considerable increase in the time necessary for carrying out the overall process. The time necessary to carry out the said operations of insertion and bending during the intervals between the winding of one coil and the winding of the next coil may in fact reach as much as 50% of the total time required for carrying out the whole process.

Attempts have been made in the past to reduce the duration of the pause required between the winding of two successive coils to effect the bending and insertion operations. These attempts have involved use of commutators of a particular type, for example hook commutators, which have not however solved the problem satisfactorily. This is true also in the case of the device described in GB—A—1 149 433.

The object of the present invention is to avoid the said disadvantage.

According to the invention this object is achieved by providing a device as defined in the attached Claim 1.

Further characteristics and advantages of the present invention will become apparent from the description which follows with reference to the appended drawings, provided purely by way of non-limiting example, in which:

Figures 1 to 4 illustrate four successive steps according to a prior art method for forming the rotor winding coils of a dynamoelectric machine and for anchoring the ends of the coils to a commutator associated with the rotor,

Figure 5 is a section taken on line V of Figure 1,

Figures 6, 7 illustrate two sectional views of two different known forms of commutator,

Figure 8 is a sectional view of a preferred embodiment of the device according to the invention,

Figure 9 is a further sectional view of the device of Figure 8,

Figure 10 illustrates a detail of the device of Figure 8 in perspective.

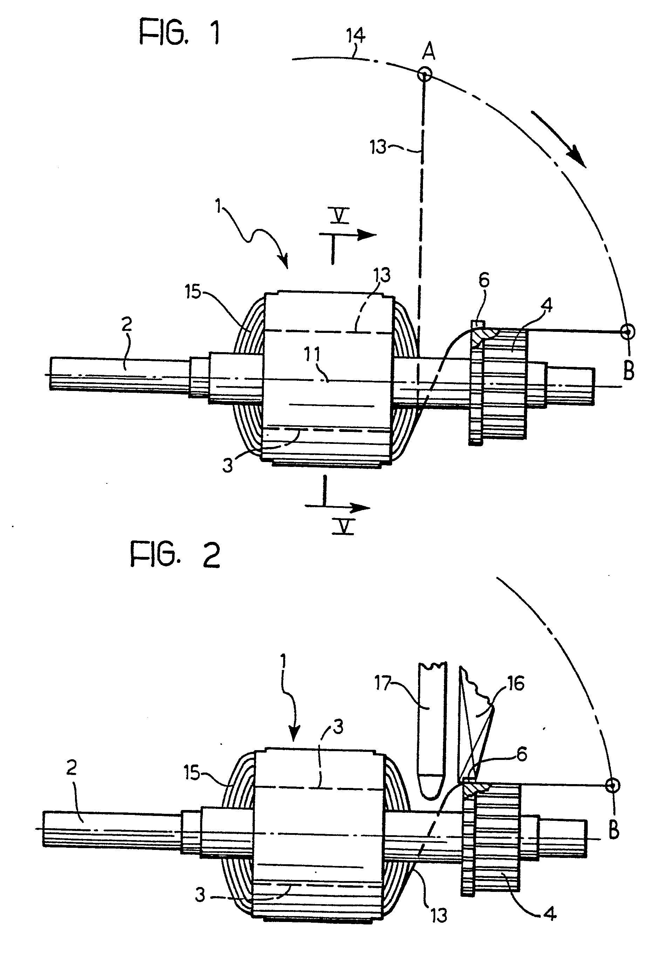

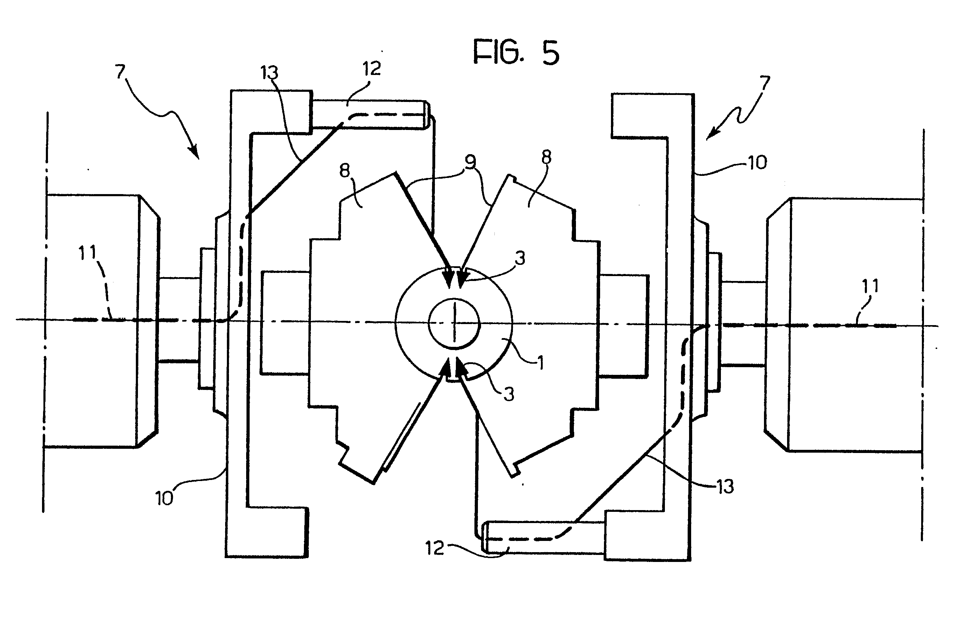

In Figures 1 to 4, reference numeral 1 indicates the rotor of a dynamoelectric machine, the rotor being mounted on a shaft 2 and having, in known manner a body in the form of a hollow cylinder provided in its outer surface with a plurality of radial slots 3 (see also Figure 5) that extend axially over the entire length of the rotor and are intended to receive the coils of the winding. The rotor 1 has an associated commutator 4 also of known type, fixed to the shaft 2 in a position axially spaced from the rotor 1. The commutator 4 includes, in known manner, a circumferential series of radial segments 5, for example of hardened copper, that are insulated from each other by means of mica sheets and are so disposed as to constitute a hollow cylindrical body which is fixed to the shaft 2. Each segment 5 has a slot 6 in the end of its axially extending outer edge that is nearest the rotor 1. The slots 6 of the commutator are intended to receive the ends of the winding coils of the rotor 1.

According to known practice, the formation of the winding coils within the slots of the rotor 1 is achieved by using support means (not illustrated) to secure the shaft 2 carrying the rotor 1 and the commutator 4, in correspondence with a conventional device for winding the copper wire, intended to constitute the coils, within the slots of the rotor.

Figure 5 illustrates the case in which two winding devices 7 are provided on the two sides of the rotor 1 to allow the simultaneous formation of two coils around two pairs of opposite slots 3 in the rotor.

Two fixed structures 8 are also arranged in correspondence with the rotor 1 and have inclined planes 9 for causing the turns of copper wire to slide into the slots 3 as they are wound by the devices 7 on the said surfaces 9. Each winding device 7 is of conventional type including a winding head 10 which rotates about an axis 11 and a winding arm 12 to which the copper wire 13 is fed for winding.

In Figures 1 to 4, the circle indicated 14 refers to the path travelled by the axis of the winding arm 12 of one of the two devices 7 in a plane perpendicular to the axis 11.

With reference to Figure 1, the winding arm 12 rotates in an anticlockwise sense about the axis 11 to allow the formation of a coil 15 within two opposite slots 3 of the rotor.

The terminating end of each coil 15 and the starting end of the subsequently-formed coil are to be inserted in the same slot 6 in the commutator 4.

According to known practice, at the end of the formation of one coil 15, the winding arm 12 is stopped in the position illustrated in Figure 1, after which it is rotated in a clockwise sense into the position indicated B in order to dispose the portion of copper wire 13 coming away from the coil 15, in a position adjacent the slot 6 in the commutator 4 into which the terminating end of the coil is to be inserted. The known devices provide for the use of an inserter device 16 arranged to move radially relative to the axis of the shaft 2 between a position spaced therefrom and a position close thereto in which it causes the insertion of the terminating end of the coil into the slot 6 in the commutator.

The known devices also include a thrust element 17 movable radially jointly with the inserter tool 16 to deform towards the axis of the shaft 2 the portion of copper wire 13 adjacent the coil terminating end and extending between the rotor 1 and the commutator 4. The thrust element 17 has its working end closer to the axis of the shaft 2 than the inserter tool 16 so as to effect the bending of the wire before the insertion of the end of the coil in the slot 6 of the commutator. Bending of the wire after the insertion of the end of the coil in the slot of the commutator could in fact result in the wire breaking.

Figure 2 illustrates the thrust element 17 and the inserter tool 16 in their working position after the formation of a first coil 15 in the rotor slots, the thrust element 17 possibly not appearing to be useful in that it does not contact the copper wire. However it should be borne in mind that after the formation of a certain number of coils, the portions of copper wire which are located between the rotor and the commutator are superposed on each other, producing a certain radial bulk and making the presence of the thrust element 17 useful for radially clamping the bundle of wires located between the rotor and the commutator. The inserter tool 16 is constituted by a blade which obviously has a smaller thickness than the width of the commutator slot so as to be able to insert the ends of the coils within these slots.

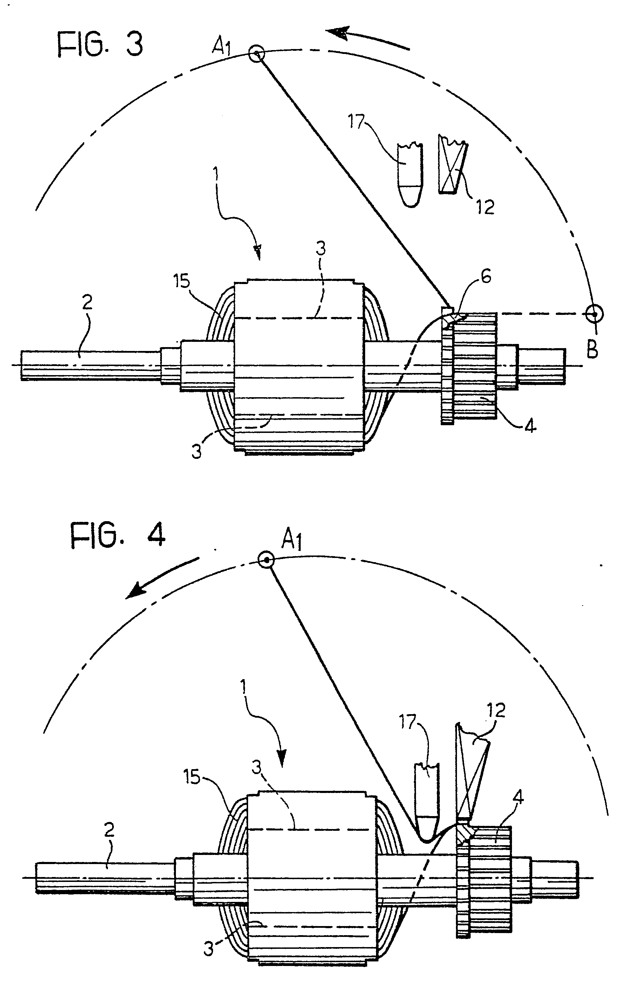

Again according to the known art, once the step illustrated in Figure 2 has been carried out, the insertion and bending assembly constituted by the elements 12, 17 is moved back into its radial position spaced from the shaft 2 and the winding head is rotated in an anticlockwise sense so as to bring the winding arm 12 from the position B to the position A1. At this point (see Figure 4), the insertion and bending assembly is returned to its working position so as to bring about the insertion of the starting end of the coil next to be wound, in the same slot 6 as that in which the terminating end of the preceding coil 15 has been inserted.

Immediately before this, the thrust element 17 bends the portion of copper wire lying between the commutator 4 and the rotor 1 towards the shaft 2. The winding head then rotates in an anticlockwise sense to form the next coil within the slots of the rotor. During the winding of the coil the insertion and bending device 12, 17 is returned to its non-working radial position. When the next coil is to be wound in two slots adjacent those of the preceding coil, before the new winding operation is started the shaft 2 is rotated one step to bring a new pair of slots into position for receiving a coil.

As has already been explained in the preamble to the present description, the prior-art process which has been described briefly above, includes many dead periods and has a total duration which may be twice the time strictly necessary for forming the coils within the rotor slots.

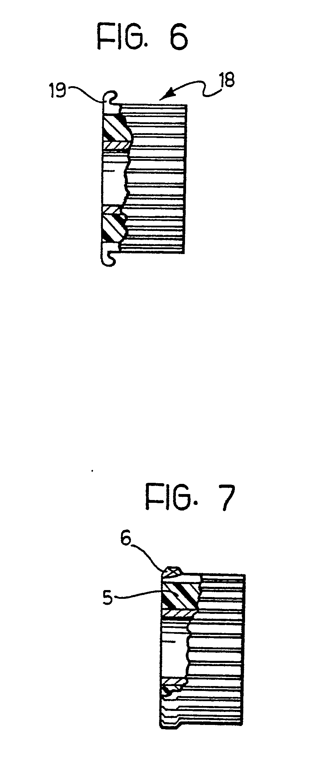

In order to speed up the said working cycle, attempts have been made in the past to use commutators provided with hooks, of the type indicated 18 in Figure 6. In the case of such commutators, the ends of each coil are connected to the commutator by means of the hooks 19 with which the latter is provided. In this case the movements which must be carried out with the winding head in a stationary condition are the same as those indicated above with reference to Figures 1, 3 and 4 and instead of the inserter tool 16, a squashing tool is used which is operated only once, during a step corresponding to that of Figure 4, in order to squash the hook onto the portion of wire disposed around the hook. The duration of the operations carried out with the winding head stopped is thus reduced relative to the known case described above. However, this second solution has disadvantages due to the greater cost of the hook commutator as compared with conventional types, poor reliability of the contact between the bent hook and the copper wire, and the fact that at high speeds the contact between the copper wire and the hook becomes more labile because of detachment of the hook from the wire as a result of centrifugal forces.

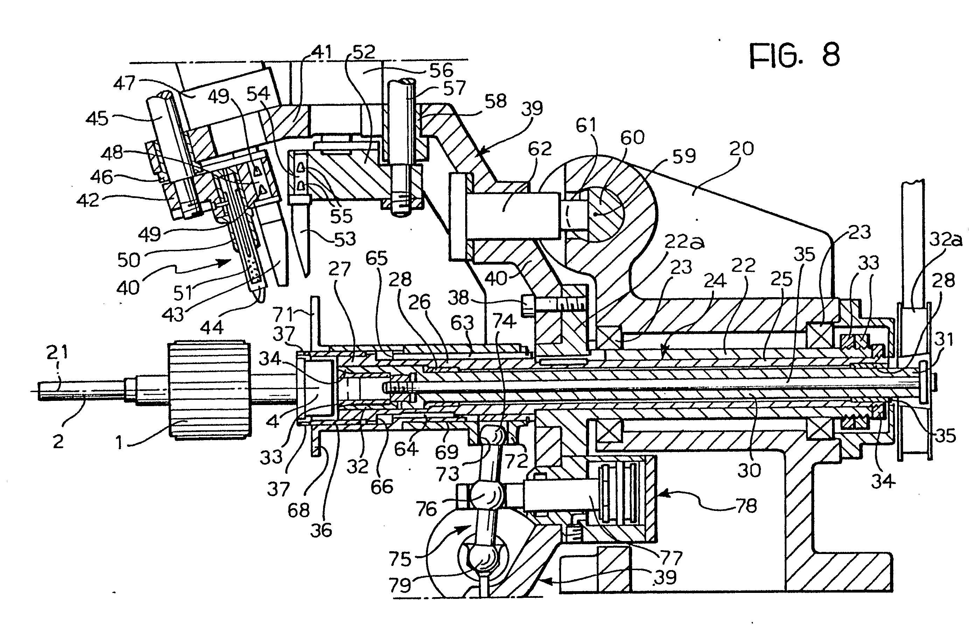

In the device according to the present invention, illustrated in Figures 8 to 10, only the operations illustrated with reference to Figures 1 and 3 are carried out with the winding head stopped, while the operations described with reference to Figures 2 and 4 are achieved during the winding cycle. Consequently there is a considerable reduction in the total cycle time, especially considering the fact that the operations described with reference to Figures 2 and 4 are the longest. The time reduction may, other conditions being equal, be as much as 50% of the duration of known processes.

The preferred embodiment of the device of the invention is illustrated in Figures 8 to 10 and includes a fixed structure 20 which is intended to be mounted on the base of a machine and which supports, via two roller bearings 23, a sleeve 22 for rotation about a main axis 21.

A hollow shaft 24 is fixed within the sleeve 22 and has a first end portion 25 located within the sleeve 22, an intermediate portion 26 and a second end portion 27 located outside the sleeve 22. The intermediate portion 26 has a greater diameter than the first end portion 25. The second end portion 27 in its turn has a greater diameter than the intermediate portion 26.

A hollow mandrel 30 is supported for rotation about the main axis 21 within the hollow shaft 25 with the interposition of two bushes 28, the mandrel having one end 31 on which is mounted a pulley 32 arranged to be rotatably driven by means of a conventional drive transmission (not illustrated). The sleeve 22 has a threaded end portion onto which locking rings 33 are screwed to retain the corresponding bearing 23 in position.

A locking ring 34 is screwed onto the end portion of the hollow shaft 24 facing the pulley 32. Finally a resilient ring 35 is mounted on the end 31 of the hollow mandrel 30 to axially locate the mandrel 30.

The part of the hollow mandrel 30 opposite its end 31 is formed with a cup-shaped end 32 in which there is located a gripper 33. This gripper 33 includes radially displaceable gripping sectors which engage a conical surface 34 formed by the internal wall of the cup-shaped end 32 and are connected to a tie rod 35 located within the hollow mandrel 30. The rod 35 is displaceable axially by drive means of known type (not illustrated) to cause the engagement of the sectors 33 with the conical surface 34. The end of the shaft 2 (indicated in broken outline in Figure 8) which is adjacent the commutator 4 is intended to be held fast by the gripper 33 within the cup-shaped end 32 of the hollow mandrel 30. This latter is thus used as a support structure for the shaft 2 carrying the rotor and the commutator, as well as a means for rotating this shaft about the main axis 21 to allow insertion of the winding coils in the various slots of the rotor. Fixed to the end 27 of the hollow shaft 24 is a tubular element 36 which projects axially beyond the end 27 so that its free end edge is adjacent the circumferential series of slots in the commutator. The tubular element 36 is formed with notches 37 which are in radial alignment with corresponding ones of the commutator slots and are intended to act as guides for insertion of the ends of the coils in the slots of the commutator.

The sleeve 22 has a flange 22a at its end facing the rotor 1. Two support arms 39 are fixed to the flange by screws 38 and support two insertion and bending assemblies 40, only one of which is illustrated in Figure 8.

The device illustrated by way of example in the appended drawings includes two insertion and bending assemblies 40 in order to allow the simultaneous winding of two coils in two pairs of rotor slots. Clearly, however, the device according to the invention may alternatively be provided with a single support arm 39 carrying a single bending and insertion assembly.

Each support arm 39 includes a first portion 40 extending radially outwardly from the flange 22a and a second portion 41 extending substantially axially and carrying the insertion and bending assembly at its end. This assembly comprises a support 42 which is slidably mounted relative to the portion 41 of the arm 39 for movement in a direction substantially radially of the main axis 21, between a spaced position (illustrated in Figure 8) and a close in position in which an inserter tool 43 and a wire-bending thrust element 44 are in their operative positions. The support 42 is provided with a cylindrical guide rod 45 which is slidably mounted, with the interposition of a bush 46, in the end of the portion 41 of the support arm 39.

The movement of the assembly 40 between its said position spaced from the main axis 21 and the said position close in to the axis, is effected by means of an actuator 47 which is carried by the support arm 39 and has its rod connected to the support 42.

The inserter tool 43, in the form of a blade, is intended to be inserted in the notches 37 of the tubular element 36 and in the commutator slots in order to cause the insertion of the ends of the winding coils into the commutator slots. The inserter tool 43 has a tang 48 which is fixed within a corresponding hole in the support 42 by screws (not illustrated) the ends of which act on flat portions 49 of the surface of the tang 48.

The wire-bending thrust element 44 has a cylindrical body with a working end shaped like a nose, and is slidable in a bush 50 fixed to the support 42. A helical spring 51 interposed between the element 44 and the bush 50 urges the element 44 into an extended position.

The arm 39 also acts as a support for a wire cutting unit including a support 52 carrying a wire cutting blade 53. This latter, in a similar manner to the inserter blade 43 has a tang 54 with flat surface portions 55 for engagement by the ends of locking screws (not illustrated) arranged to secure the tang 54 in a seat in the support 52. This support is also mounted for sliding movement relative to the arm 39, in a direction radially of the axis 21, between a position spaced from the main axis 21 (illustrated in Figure 8) and a position close in to this axis in which the blade 53 is in its operative condition. The radial movement of the unit 52 is effected by means of an actuator 56 and is guided by a guide rod 57 which is fixed at one end to the support 52 and is slidably mounted, with the interposition of a bush 58, in the structure of the arm 39.

The arm 39 and the units 40 and 52 carried thereby can be bodily rotated about the main axis 21 by virtue of the fact that the arm 39 is fixed to the sleeve 22 which in its turn is rotatably supported about the axis 21 of the fixed structure 20 by means of the bearings 23.

Mounted on the fixed structure 20 is an actuator the axis 59 of which is tangential to the axis 21 and lies in a plane perpendicular to the axis 21. Figure 8 illustrates only the shaft 60 of this actuator, the shaft being provided with a lateral groove 61 in which one end of an axial pin 62 carried by the support arm 39 is engaged. The shaft 60 of this actuator is arranged to cause, via the pin 62, pivoting movement of the support arm 39 about the main axis 21 between two different angular positions spaced from each other by an angle which can be adjusted by means known per se (not illustrated), the angle being substantially equal to the angle between two adjacent commutator slots.

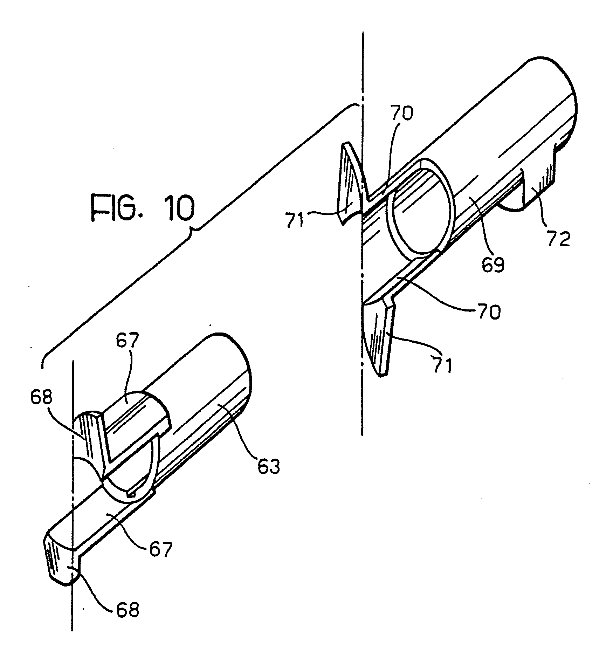

A bush 63 is mounted on the intermediate portion 26 of the hollow shaft 25 with the interposition of a splined coupling 64 so that the bush 63 is fast for rotation with the shaft 24 but is movable axially relative thereto between a position spaced from the commutator 4 (illustrated in Figure 8) and an advanced position in which one of its end surfaces 65 (see also Figure 10) is in contact with an annular shoulder 66 defined by the larger diameter portion 27 of the hollow shaft 24.

As illustrated clearly in Figure 10, the bush 63 has two axial projections 67 on its end facing the commutator 4, the projections having two radial fins 68 at their free ends serving as gripping elements for the copper wire as will be clarified below.

A second bush 69 is rotatably mounted on the bush 63 and is movable axially with the bush 63 between the two limit positions defined above. The bush 69 has two diametrically-opposed axial projections 70 on its end facing the commutator 4, the projections 70 being formed at their free ends with two radial fins 71 which are arranged to cooperate with the radial fins 68 to grasp the ends of two coils wound simultaneously in the slots of the rotor 1. The two bushes 63, 69 are provided with two pairs of radial fins 68, 71 since the embodiment of the device described above provides for the simultaneous winding of two coils in the rotor slots. Obviously, however, it would suffice to provide a single pair of radial gripping fins for the wire in cases where the device provides for the winding of only one coil at a time in one pair of rotor slots.

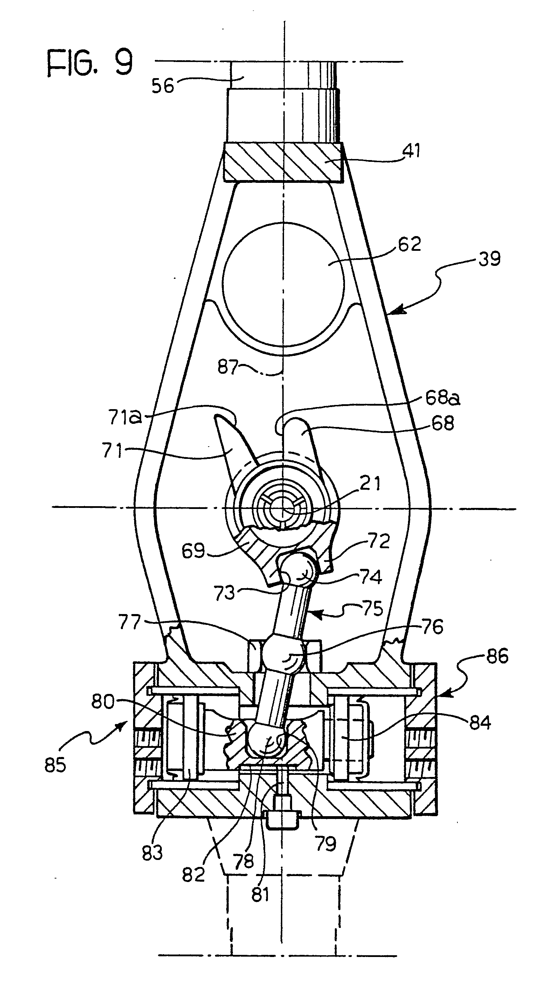

As is also visible in Figure 9, the bush 69 has an external lug 72 formed with a radial hole 73 which receives one end 74 of a lever 75. The lever 75 is articulated in an intermediate zone 76 to a shaft 77 of an actuator 78 arranged parallel to the main axis 21. The end 79 of the lever 75 opposite the end 74 is articulated in a seat 79 of a control member 80 which is movable, in a direction perpendicular to the plane containing the main axis 21 and the axis of the cylinder 78, between two limit positions defined by the engagement of a pin 81 against the ends of a groove 82 formed in the control member 80. This latter is connected at its ends to the pistons 83, 84 of two actuators 85, 86 which control the position of the control member 80.

The actuator 78 serves to effect the simultaneous axial displacement of the bushes 63, 69 and consequently of the two pairs of gripping fins 68, 71, between the position spaced from the commutator illustrated in Figure 8 and the advanced position corresponding to stoppage against the annular shoulder 66 of the shaft 24. In this advanced position the two pairs of fins 68, 71 are axially positioned in correspondence with the circumferential series of slots in the commutator 4.

The bush 63 is in a fixed angular position relative to the shaft 24 while the bush 69 may be rotated relative to the bush 63 by means of the lever 75 and the two actuators 85, 86. The bush 69 can be rotated between a first position, illustrated in Figure 9, in which the facing edges 68a and 71a of each pair of gripping fins 68, 71 are spaced from each other by an angle for example substantially equal to 30° (the edges 68a and 71a being contained in radial planes passing through the main axis 21), and a second position in which the edges 68a, 71a are substantially in contact with each other and lie in a plane substantially coincident with the median plane 87 (see Figure 9) of the device.

The operation of the device described above is as follows.

At the beginning of a cycle, before the placement of the shaft 2 carrying the rotor 1 and the commutator 4 on the machine, the gripper 33 is in an open position and the pivotable assembly constituted by the two support arms 39, and the respective assemblies supported thereby, are in the central position illustrated in Figure 9. The bushes 63, 69 are in their axially withdrawn position illustrated in Figure 8, and the rotatable bush 69 is in its angular position corresponding to the closure of the two pairs of fins 68, 71. For each of the two coils intended to be wound simultaneously on the rotor, the end of the wire to be used is held by a corresponding pair of the gripping fins 68, 71. Under these conditions, the shaft 2 can be mounted on the machine and held by means of the gripper 33, the shaft being located in an angular position such that one of the slots 6 of the commutator 4 is located in correspondence with the edge 68a of the fin 68. It is possible to provide means of known type (not illustrated) for automatically finding the correct angular position for the commutator.

The winding arms 12 (see Figure 5) are thereafter rotated to wind two coils simultaneously within two pairs of slots 3 in the rotor. Once the first turn of each coil has been wound and during subsequent winding, the following operations are effected successively: the cylinder 78 causes the simultaneous axial movement of the two bushes 63, 69 towards the position closed up towards the commutator 4 corresponding to the engagement of the end 65 of the bush 63 against the annular shoulder 66 so as to slacken the starting portion of wire of the winding; the actuator 47 is then actuated to bring the bending and insertion assembly into its working position. In this working position, the wire-bending thrust element 44 causes the bending of the portion of wire between the end gripped between the fins 68, 71 and the coil being wound on the rotor, pushing this portion towards the shaft 2, into the zone between the rotor 1 and the commutator 4. This bending is effected without the risk of breaking the wire by virtue of the fact that this portion of wire has previously been slackened. Immediately after this bending operation, the inserter blade 43, the operative end of which is slightly set back relative to the operative end of the wire-bending element 44, is inserted between the fins 68, 71 (the edges 68a, 71a of which have flared leading portions at their radially outer ends) into the corresponding notch 37 of the tubular element 36 and the slot 6 of the commutator thereby causing the insertion of the copper wire into this slot. Once this operation has been effected, and while the winding of the coil on the rotor is still continuing, the actuator 47 returns the assembly 40 to the position illustrated in Figure 8. Any unwanted wire is cut off by means of the actuator 56 and the wire cutting blade 53, and the fins 68, 71 are returned, if desired, into their opened state illustrated in Figure 9 and into their axial withdrawn position illustrated in Figure 8. The actuator 56 returns the wire cutting blade 53 to the position illustrated in Figure 8.

The pivotable unit constituted by the two support arms 39 is then rotated about the main axis 21 through an angle corresponding to the angle between two adjacent slots in the commutator, by means of the rod 60 of the corresponding actuator, whereby to bring the edge 68a of the fin 68 into the radial plane corresponding to the commutator slot adjacent that into which the starting end of the coil was inserted. The terminating end of each coil must in fact be inserted into the same commutator slot as that in which the starting end of the next coil is inserted. Obviously the terminating end of the last coil is inserted into the slot in which the starting end of the first coil has been inserted.

At the end of the formation of the first coil, when the winding arm begins its slowing down revolution, each fin 71 must be brought into its open position illustrated in Figure 9 if this has not already been done. The winding arm is stopped in position A of Figure 1 and is then rotated in the opposite sense to bring it into the position B which is angularly displaced by 90° relative to position A. In this manner, the portion of wire between the winding arm and the coil already wound on the rotor, is inserted between the fins 68, 71. The fin 71 is rotated to bring it into its closed position so as to cause the pinching of the wire between the two fins 68, 71. At this point the process differs from known processes in that the winding arm 12 proceeds immediately to wind the second coil without waiting for the insertion of the terminating portion of the first coil in the corresponding commutator slot. Once the first turn of the second coil has been wound, and while winding of the second coil continues the following operations are carried out: the two bushes 63, 69 are brought into their axial position closed up towards the commutator 4 so as to slacken the initial portion of wire extending between the end gripped by the fins 68, 71 and the turns being wound on the rotor; the assembly 40 is advanced by means of the actuator 47 to bend the slackened portion of wire towards the shaft 2 and insert the wire in the corresponding commutator slot in the manner which has been described above; the assembly 40 is then returned to its non-working position and the fins 68, 71 are returned to their open withdrawn condition.

At the end of the formation of the second coil, the same operations described above that are carried out at the end of the formation of the first coil, are carried out with the addition of a rotation of the hollow mandrel 30 through an angle equal to the angle between two adjacent slots 3 in the rotor. This rotation which must be carried out each time two coils have been formed, is effected by means of a stepping motor (not illustrated) driving the hollow mandrel 30.

After the final coil has been wound, an identical cycle of operations is carried out with the addition of the following operations: the fins 68, 71 are closed to pinch the wire; the actuator 56 operates the wire cutting blade 53.

In the device according to the invention, the use of the fins 68, 71 constitute ancillary gripper means which hold the end of the coil wire during winding of the first coil and insertion of the wire end into the corresponding commutator slot, allow the bending and insertion operations to be carried out during the execution of the winding process and also allow squeezing of the wire itself to be effected to give the latter a predetermined width whatever the initial diameter of the wire. This allows the use of a single type of commutator with different diameter wires which is not possible with devices according to the known art.

**Claims**

1. A device for forming the coils (15) of the winding of a rotor (1) of a dynamoelectric machine and for anchoring the ends of the coils (15) to a commutator (4) associated with the rotor, in which the rotor (1) and commutator (4) each have a hollow cylindrical body and are mounted on the same shaft (2) in positions axially spaced from each other, in which the rotor (1) has a plurality of axially-extending radial slots (3) intended to receive the coils of ths winding, and in which the commutator (4) includes a plurality of radial segments (5) each having a slot (6) in its axially-extending outer edge at its end facing the rotor (1),

the device including:
— a fixed structure (20),
— a first support structure (30) for supporting the shaft (2) carrying the rotor (1) and the commutator (4) for rotation about a main axis (21),
— means for varying the angular position of the shaft (2) carrying the rotor and the commutator,
— means (12) for winding a copper wire around pairs of slots (3) of the rotor (1) to form the various coils of the winding,
— means for inserting each coil end in a corresponding slot in the commutator (4),
— means for bending the portion of copper wire that is adjacent the end of the coil and extends between the rotor (1) and the commutator (4), towards the shaft (2) of the rotor (1) immediately before the insertion of each coil end in the corresponding commutator slot,
— ancillary holding means (68, 71) for holding the end of the coil temporarily during the formation of the coil and before the said operation of insertion of the end of the coil in the corresponding slot (6) of the commutator (4),
the ancillary holding means (68, 71) being arranged to move axially from a position spaced from the rotor (1) to a position closer to the rotor (1) at the moment at which the said bending operation is carried out,
— a second support structure (39) for supporting the bending means and the insertion means (44, 43), the said second support structure (39) being mounted on the fixed structure (20) for pivoting movement about the main axis (21),
— means (60, 62) for pivoting the second support structure (39) between two different angular positions spaced from each other by an angle substantially equal to the angle between two adjacent slots of the commutator (4),

—a support member (26) connected to the second support structure (39) and arranged to support of the holding means,

characterised in that the holding means include at least one pair of gripper elements (68, 71) located adjacent the commutator (4), one of these gripper elements (71) being rotatable relative to the other gripper element (68) about the said main axis (21), whereby these gripper elements (68, 71) are movable between a closed position for gripping the end of a coil, and a mutually-spaced position, the gripper elements (68, 71) also being jointly movable in an axial direction between the said spaced position and the said closer position relative to the rotor (1).

2. A device according to Claim 1, characterised in that the second support structure includes a sleeve (22) mounted on the fixed structure (20) for rotation about the said main axis (21) and having a support flange (22a) on its end facing the rotor (1),

at least one support arm (39) having a first portion (40) fixed to the support flange (22a) and extending radially outwardly from the flange, and a second portion (41) which extends axially towards the rotor (1),

an assembly for bending and inserting the wire (40) including a wire-bending element (44) and an insertion blade (43) jointly radially movable relative to the second portion (41) of the support arm (39) between a non-working position spaced from the commutator (4) and an operative close-in position.

3. A device according to Claim 2, characterised in that the fixed structure (20) has an actuator for pivoting the second support structure (39).

4. A device according to Claim 2, characterised in that the support arm (39) has an actuator (47) for effecting the radial movement of the bending and insertion assembly (40).

5. A device according to Claim 2, characterised in that the support arm (39) has a wire-cutting device (53) and an actuator (56) for effecting movement of the cutting device (53) between an inoperative position and an operative position.

6. A device according to Claim 3, characterised in that the support arm (39) has an axial pin (62) connected to a shaft (60 of the actuator.

7. A device according to Claim 4, characterised in that the bending and insertion assembly (40) includes a body (42) having a cylindrical guide rod (45) slidably mounted in the support arm (39).

8. A device according to Claim 5, characterised in that the cutting device (53) is fixed to a support (52) which is controlled by the said actuator (56), the support (52) being provided with a cylindrical guide rod (57) which is slidably mounted in the support arm (39).

9. A device according to Claim 1, characterised in that the device further includes:

a hollow shaft (24) having a first end portion (25) fixed within the said sleeve (22), an intermediate portion (26) which is of greater diameter than the first end portion and projects axially beyond the sleeve (22), and a second end portion (27) of greater diameter than the intermediate portion (26),

a first bush (63) mounted on the intermediate portion (26), the first bush (63) being fast for rotation with the intermediate portion (26) but movable axially relative to the latter between a spaced position and a closer-in position relative to the commutator (4),

a second bush (69) rotatably mounted on the first bush (63) and movable axially therewith,

the first bush (63) and the second bush (69) each having a pair of diametrically-opposed axial projections (67, 70) at their ends facing the commutator (4), the projections being provided at their free ends with radial fins (68, 71) constituting the said gripper elements,

means (78, 75) for effecting axial movement of the two bushes (63, 69) relative to the intermediate portion (26) of the hollow shaft (24), and means (85, 86, 75) for effecting rotation of the second bush (69) relative to the first bush (63) about the said main axis (21).

10. A device according to Claim 9, characterised in that the means for effecting the axial movement of the two bushes (63, 69) and the angular movement of the second bush (69) include a plurality of actuators (78, 85, 86) acting on a single control lever (75) connected to the second bush (69).

11. A device according to Claim 10, characterised in that the first support structure is constituted by a hollow mandrel (30) rotatably mounted within the said hollow shaft (24) and having a cup-shaped end (32) provided with a gripper device (33) for gripping one end of the shaft (2) carrying the rotor (1) and the commutator (4).

12. A device according to Claim 10, characterised in that the gripper device (33) is operable by means of a tie rod (35) located within the hollow mandrel (30).

13. A device according to Claim 12, characterised in that the hollow mandrel (30) is provided at its end (31) opposite said cup-shaped end (32) with a pulley (32a) connected to a drive transmission.

14. A device according to any one of the preceding claims, characterised in that the gripper means are arranged to apply a pressure to the portion of wire gripped thereby such as to squeeze the wire itself so as to cause it to conform to a predetermined width corresponding substantially to the width of the corresponding commutator slot whereby it is possible to use the same type of commutator whatever the diameter of the wire.

**Patentansprüche**

1. Vorrichtung zum Formen der Wicklungsspulen (15) eines Rotors (1) einer dynamo-elektrischen Maschine und zum Verankern der Enden der Spulen (15) an einem mit dem Rotor (1) verbundenen Kommutator (4), wobei der Rotor (1) und der Kommutator (4) jeweils einen hohlen Zylinderkörper aufweisen, und im Abstand von-

7

einander auf einer gemeinsamen Welle (2) angeordnet sind und der Rotor (1) eine Vielzahl von sich axial erstreckenden, radialen Schlitzen (3) zur Aufnahme der Spulen der Wicklung aufweist und der Kommutator (4) eine Vielzahl von radialen Segmenten (5) umfaßt, die jeweils an sich axial erstreckenden Außenrändern des dem Motor zugewandten Endes einen Schlitz (6) besitzen, und wobei die Vorrichtung folgende Merkmale umfaßt

—einen befestigten Aufbau (20),

—einen ersten Stützaufbau (30) zum Abstützen der den Rotor (1) und den Kommutator (4) zur Drehung um eine Hauptachse (21) tragenden Welle (2),

—Mittel zum Verändern der Winkelposition der den Rotor (1) und den Kommutator (4) tragenden Welle (2),

—Mittel (12) zum Wickeln eines Kupferdrahts um Paare von Schlitzen (3) des Rotors, um die verschiedenen Spulen der Wicklung auszubilden,

—Mittel zum Einsetzen jedes Spulenendes in einen entsprechenden Schlitz in dem Kommutator (4),

—Mittel zum Abbiegen des Abschnitts des Kupferdrahts, der dem Ende der Spule benachbart ist und sich zwischen dem Rotor (1) und dem Kommutator erstreckt, in Richtung der Welle (2) des Rotors unmittelbar vor dem Einsetzen jedes Spulenendes in den entsprechenden Schlitz (6) des Kommutators (4),

—Hilfsmittel (68, 71) zum zeitweiligen Halten des Spulenendes während des Ausbildens der Spule und vor dem Einsetzvorgang des Endes in den entsprechenden Schlitz (6) des Kommutators (4), wobei die Hilfsmittel (68, 71) so angeordnet sind, daß sie in dem Moment, in dem die Biegeoperation ausgeführt wird, aus einer ersten, vom Rotor (1) entfernten Stellung in eine den Rotor (1) nähere Stellung bringbar sind,

—einen zweiten Stützaufbau (39) zum Unterstützen der Biege- und der Einsetzmittel (44, 43), welcher zweite Stützaufbau (39) für die Schwenkbewegung um die Hauptachse (21) auf dem festen Aufbau (20) angebracht ist,

—Mittel (60, 62) zum Schwenken des zweiten Stützaufbaus (39) zwischen zwei verschiedenen Winkelpositionen, die um den Winkelabstand zwischen zwei benachbarten Schlitzen des Kommutators (4) voneinander entfernt sind, und

—ein mit dem zweiten Stützaufbau (39) verbundenes Stützteil (26), das die Haltemittel abstützt, dadurch gekennzeichnet, daß die Haltemittel zumindest ein Paar neben dem Kommutator (4) angeordnete Greiferlemente (68, 71) aufweisen, wobei eines dieser Greiferelemente (71) relativ zum anderen Greiferelement (68) um die Hauptachse (21) drehbar ist und beide Greiferelemente (71, 68) zwischen einer geschlossenen Stellung zum Greifen des Endes der Spulen und einer voneinander entfernten Stellung, wie auch gemeinsam in axialer Richtung zwischen der beabstandeten Stellung und der näheren Stellung relativ zum Rotor (1) bewegbar sind.

2. Vorrichtung nach Anspruch 1, dadurch gekennzeichnet, daß der zweite Stützaufbau zur Drehung um die Hauptachse (21) eine auf dem festen Aufbau (20) angeordnete Hülse (22) aufweist, die an ihrem dem Rotor (1) zugewandten Ende einen Abstützflansch (22a) besitzt, und daß zumindest ein Stützarm (39) einen ersten an dem Abstützflansch (22a) befestigten und sich radial vom Flansch nach außen erstreckenden Abschnitt (40) und einen zweiten sich axial zu dem Rotor (1) erstreckenden Abschnitt (41) besitzt, wobei die Anordnung zum Biegen und Einsetzen des Drahts (40) ein Drahtbiegeelement (44) und ein Einsetzblatt (43) aufweist, die gemeinsam radial relativ zum zweiten Abschnitt (41) des Abstützarms (39) zwischen einer Nichtarbeitsposition, die vom Kommutator (4) einen Abstand aufweist und einer Arbeits-Einschließposition bewegbar sind.

3. Vorrichtung nach Anspruch 2, dadurch gekennzeichnet, daß der befestigte Aufbau (20) einen Betätiger zum Verschwenken des zweiten Stützaufbaus (39) aufweist.

4. Vorrichtung nach Anspruch 2, dadurch gekennzeichnet, daß der Abstützarm (39) einen Betätiger (47) zum Durchführen der Radialbewegung der Biege- und Einsetzanordnung (40) aufweist.

5. Vorrichtung nach Anspruch 2, dadurch gekennzeichnet, daß der Abstützarm (39) eine Drahtschneideeinrichtung (53) und einen Betätiger (56) zum Durchführen der Bewegung der Schneidevorrichtung (53) zwischen einer Ruhestellung und einer Arbeitsstellung aufweist.

6. Vorrichtung nach Anspruch 3, dadurch gekennzeichnet, daß der Abstützarm (39) einen axialen Stift (62) besitzt, der mit einer Welle (60) des Betätigers verbunden ist.

7. Vorrichtung nach Anspruch 4, dadurch gekennzeichnet, daß die Biege- und Einsetzanordnung (40) einen Körper (42) mit einer zylindrischen Führungsstange (45) aufweist, die in dem Abstützarm (39) gleitend angeordnet ist.

8. Vorrichtung nach Anspruch 5, dadurch gekennzeichnet, daß die Schneidevorrichtung (53) an einem durch den Betätiger (56) gesteuerten Träger (52) angeordnet ist, der mit einer in dem Trägerarm (39) gleitend bewegbaren zylindrischen Führungsstange (57) versehen ist.

9. Vorrichtung nach Anspruch 1, dadurch gekennzeichnet, daß:

—eine hohle Welle (24) einen in der Hülse (22) befestigten ersten Endabschnitt (25), einen Zwischenabschnitt (26), der einen größeren Durchmesser aufweist als der erste Endabschnitt und axial über die Hülse (22) hinausragt und einen zweiten Endabschnitt (27) aufweist, der einen größeren Durchmesser besitzt als der Zwischenabschnitt (26),

—eine erste Muffe auf dem Zwischenabschnitt (26) aufgesetzt ist (63), die zur Rotation mit dem Zwischenabschnitt (26) befestigt, jedoch relativ zu diesem Abschnitt zwischen einer Abstandsposition und einer näheren Position zum Kommutator (4) hin axial bewegbar ist,

—eine zweite Muffe (69) drehbar auf der ersten Muffe (63) angeordnet und mit dieser axial bewegbar ist,

—die erste und die zweite Muffe (63, 69) jeweils ein Paar diametral gegenüberliegender axialer Vorsprünge (67, 70) an ihren dem Kommutator (4) zugewandten Enden aufweist, die an ihren freien Enden mit radialen Flossen (68, 71) versehen sind, welche die Greiferelemente bilden, und

—Mittel (78, 75) zum Durchführen der axialen Bewegung der beiden Muffen (63, 69) relativ zum Zwischenabschnitt (26) der hohlen Welle (24) und Mittel (85, 86, 75) zum Drehen der zweiten Muffe (69) relativ zur ersten Muffe (63) um die Hauptachse (21) vorgesehen sind.

10. Vorrichtung nach Anspruch 9, dadurch gekennzeichnet, daß die Mittel zum Durchführen der axialen Bewegung der beiden Muffen (63, 69) und der Winkelbewegung der zweiten Muffe (69) eine Vielzahl von Betätigern (78, 85, 86) aufweisen, die auf einen einzigen Steuerhebel (75) einwirken, der an die zweite Muffe (69) angeschlossen ist.

11. Vorrichtung nach Anspruch 10, dadurch gekennzeichnet, daß der erste Stützaufbau durch einen drehbar in der hohlen Welle (24) angeordneten hohlen Dorn (30) mit einem tassenförmigen Ende (32) ausgebildet ist, welches Ende mit einer Greifervorrichtung (33) zum Ergreifen eines Endes der Welle (2) ausgebildet ist, die den Rotor (1) und den Kommutator trägt.

12. Vorrichtung nach Anspruch 10, dadurch gekennzeichnet, daß die Greifervorrichtung (33) mittels einer in dem hohlen Dorn (30) angeordneten Zugstange (35) betätigbar ist.

13. Vorrichtung nach Anspruch 12, dadurch gekennzeichnet, daß der hohle Dorn (30) an seinem dem tassenförmigen Ende (32) abgewandten Ende (31) mit einer Riemenscheibe (32a) ausgestattet ist, die mit einem Riementrieb in Verbindung steht.

14. Vorrichtung nach mindestens einem der vorangehenden Ansprüche, dadurch gekennzeichnet, daß die Greifmittel so angeordnet sind, daß sie einen Druck auf den ergriffenen Abschnitt des Drahts aufbringen und diesen zusammendrücken, so daß er eine vorbestimmte Breite, entsprechend im wesentlichen der Breite des zugeordneten Kommutatorschlitzes erhält, so daß es möglich ist, unabhängig vom Durchmesser des Drahtes den gleichen Kommutatortyp zu verwenden.

**Revendications**

1. Dispositif pour former les bobines (15) de l'enroulement d'un rotor (1) d'une machine dynamo-électrique et pour fixer les extrémités des bobines (15) à un collecteur (4) associé au rotor,

—dans lequel le rotor (1) et le collecteur (4) comportent chacun un corps cylindrique creux et sont montés sur le même arbre (2) dans des positions distantes axialement l'une de l'autre, et dans lequel le rotor (1) possède une pluralité d'encoches radiales (3) s'étendant axialement et destinées à recevoir les bobines de l'enroulement, et dans lequel le collecteur (4) comporte une pluralité de segments radiaux (5) comportant chacun une encoche (6) ménagée dans son bord extérieur disposé axialement, sur son extrémité située en face du rotor (1),

ce dispositif comportant:

—une structure fixe (20),

—une première structure de support (30) servant à supporter l'arbre (2) portant le rotor (1) et le collecteur (4) de manière qu'il tourne autour d'un axe principal (21),

—des moyens pour modifier la position angulaire de l'arbre (2) portant le rotor et les collecteurs,

—des moyens (12) pour enrouler un fil de cuivre autour de couples d'encoches (3) du rotor (1) de manière à former les différentes bobines de l'enroulement,

—des moyens pour insérer chaque extrémité de bobine dans une encoche correspondante ménagée dans le collecteur (4),

—des moyens pour plier la partie du fil de cuivre, qui est voisine de l'extrémité de la bobine et s'étend entre le rotor (1) et le collecteur (4), en direction de l'arbre (2) du rotor, juste avant l'insertion de chaque extrémité de la bobine dans l'encoche correspondante du collecteur,

—des moyens auxiliaires de maintien (68, 71) servant à maintenir l'extrémité de la bobine temporairement pendant la formation de la bobine et avant ladite opération d'insertion de l'extrémité de la bobine dans l'encoche correspondante (6) du collecteur (4),

—les moyens auxiliaires de maintien (68, 71) étant agencés de manière à se déplacer axialement depuis une position écartée du rotor (1) jusque dans une position plus proche du rotor (1), au moment où ladite opération de pliage est exécutée,

—une seconde structure de support (39) servant à supporter les moyens de pliage et les moyens d'insertion (44, 43), ladite seconde structure de support (39) étant montée sur la structure fixe (20) de manière à avoir un mouvement de pivotement autour de l'axe principal (21),

—des moyens (60, 62) pour faire pivoter la seconde structure de support (39) entre deux positions angulaires différentes distantes l'une de l'autre d'un angle essentiellement égal à l'angle existant entre deux encoches voisines du collecteur (4),

—un organe de support (26) raccordé à la seconde structure de support (39) et agencé de manière à supporter les moyens de maintien,

caractérisé en ce que les moyens de maintien comprennent au moins un couple d'organes en forme de pinces (68, 71) situés au voisinage du collecteur (4), l'un de ces organes en forme de pince (71) pouvant tourner par rapport à l'autre organe en forme de pince (68) autour dudit axe principal (21), ce qui a pour effet que ces organes en forme de pinces (68, 71) sont déplaçables entre une position fermée permettant de saisir l'extrémité d'une bobine et une position réciproquement distante, les organes en forme de pinces (68, 71) étant également déplaçables conjointement dans une direction axiale entre ladite position écartée et ladite position plus rapprochée du rotor (1).

2. Dispositif selon la revendication 1, caractérisé en ce que la seconde structure de support comporte un manchon (22) monté sur la structure fixe (20) de manière à pouvoir tourner autour dudit axe principal (21) et comportant une bride de support (22a) au niveau de son extrémité faisant face au rotor (1),
—au moins un bras de support (39) comportant une première partie (40) fixée à la bride de support (22a) et s'étendant radialement vers l'extérieur à partir de la bride, et une seconde partie (41), qui s'étend axialement vers le rotor (1),
—un ensemble servant à plier et insérer le fil (40), comprenant un organe (44) de pliage du fil et une lame d'insertion (43), qui est déplaçable conjointement radialement par rapport à la seconde partie (41) du bras de support (39) entre une position non active distance du collecteur (4) et une position active de fermeture.

3. Dispositif selon la revendication 2, caractérisé en ce que la structure fixe (1) comporte un organe d'actionnement servant à faire pivoter la seconde structure support (39).

4. Dispositif selon la revendication 2, caractérisé en ce que le bras de support (39) comporte un actionneur (47) servant à réaliser le déplacement radial de l'ensemble de pliage et d'insertion (40).

5. Dispositif selon la revendication 2, caractérisé en ce que le bras de support (39) comporte un dispositif (53) de sectionnement de fil, et un actionneur (56) servant à réaliser le déplacement du dispositif de coupe (53) entre une position inactive et une position active.

6. Dispositif selon la revendication 3, caractérisé en ce que le bras de support (39) possède une branche axiale (62) raccordée à un arbre (60) de l'actionneur.

7. Dispositif selon la revendication 4, caractérisé en ce que l'ensemble de pliage et d'insertion (40) comporte un corps (42) possédant une tige de guidage cylindrique (45) montée de façon à pouvoir coulisser dans le bras de support (39).

8. Dispositif selon la revendication 5, caractérisé en ce que le dispositif de coupe (53) est fixé à un support (52), qui est commandé par ledit actionneur (56), le support (52) étant muni d'une tige de guidage cylindrique (57) qui est montée de façon à pouvoir coulisser dans le bras de support (39).

9. Dispositif selon la revendication 1, caractérisé en ce que ce dispositif comporte en outre:
—un arbre creux (24) comportant une première partie d'extrémité (25) fixée à l'intérieur dudit manchion (22), une partie intermédiaire (26) qui possède un diamètre plus important que la première partie d'extrémité et fait saillie axialement au-delà du manchon (22), et une second partie d'extrémité (27) possédant un diamètre supérieur à celui de la partie intermédiaire (26),
—une première douille (63) montée sur la partie intermédiaire (26), la première douille (63) étant bloquée en rotation par rapport à la partie intermédiaire (26), mais étant déplaçable axialement par rapport à cette partie intermédiaire entre une position distante du collecteur (4) et une position plus rapprochée de ce collecteur,
—une douille (69) montée rotative sur la première douille (63) et déplaçable axialement avec cette dernière,
—la première douille (63) et la seconde douille (69) comportant chacune un couple de parties saillantes axiales diamétralement opposées (67, 70) au niveau de leurs extrémités tournées vers le collecteur (4), ces parties saillantes comportant, au niveau de leurs extrémités libres, des ailettes radiales (68, 71) constituant lesdits organes en forme de pinces,
—des moyens (78, 75) servant à réaliser le déplacement axial des deux douilles (63, 69) par rapport à la partie intermédiaire (26) de l'arbre creux (24), et des moyens (85, 86, 75) servant à réaliser la rotation de la seconde douille (69) par rapport à la première douille (63) autour dudit axe principal (21).

10. Dispositif selon la revendication 9, caractérisé en ce que les moyens servant à réaliser le déplacement axial des deux douilles (63, 69) et le déplacement angulaire de la seconde douille (69) comprennent une pluralité d'organes d'actionnement (78, 85, 86) agissant sur un seul levier de commande (75) raccordé à la seconde douille (69).

11. Dispositif selon la revendication 10, caractérisé en ce que la première structure de support est constituée par un mandrin creux (30) monté rotatif à l'intérieur dudit arbre creux (24) et comportant une extrémité en forme de pot (32) munie d'un dispositif à pinces (33) servant à saisir une extrémité de l'arbre (2) portant le rotor (1) et le collecteur (4).

12. Dispositif selon la revendication 10, caractérisé en ce que le dispositif de saisie (33) peut être actionné au moyen d'une tige d'accouplement (35) située à l'intérieur du mandrin creux (30).

13. Dispositif selon la revendication 12, caractérisé en ce que le mandrin creux (30) comporte, sur son extrémité (31) située à l'opposé de ladite extrémité en forme de pot (32), une poulie (32a) raccordée à une transmission motrice.

14. Dispositif selon l'une quelconque des revendications précédentes, caractérisé en ce que le dispositif de saisie est agencé de manière à appliquer une pression à la partie du fil qu'il saisit, de manière à pincer le fil lui-même afin de l'amener à se conformer à une largeur prédéterminée correspondant essentiellement à la largeur de l'encoche correspondante du collecteur, ce qui permet d'utiliser le même type de collecteur quel que soit le diamètre du fil.

FIG. 1

FIG. 2

FIG. 3

FIG. 4

FIG. 5

# FIG. 6

# FIG. 7

FIG. 8

0 119 172

FIG. 9

FIG. 10